Europäisches Patentamt

European Patent Office

Office européen des brevets

(11) Veröffentlichungsnummer: **0 176 873**
**A1**

## (12) EUROPÄISCHE PATENTANMELDUNG

(21) Anmeldenummer: **85111814.1**

(22) Anmeldetag: **18.09.85**

(51) Int. Cl.⁴: **H 04 B 7/00**

(30) Priorität: **19.09.84 DE 3434438**

(43) Veröffentlichungstag der Anmeldung:
**09.04.86 Patentblatt 86/15**

(84) Benannte Vertragsstaaten:
**AT BE CH DE FR GB IT LI NL SE**

(71) Anmelder: **Siemens Aktiengesellschaft**
**Berlin und München Wittelsbacherplatz 2**
**D-8000 München 2(DE)**

(72) Erfinder: **Vogel, Klaus, Dipl.-Ing.**
**Kranzlstrasse 15**
**D-8192 Gelting(DE)**

(54) **Digitales Übertragungssystem mit Kreuzpolarisationsentzerrung.**

(57) Die Erfindung bezieht sich auf ein digitales Übertragungssystem für Gleichkanalübertragung mit Einrichtungen zur adaptiven Kreuzpolarisationsentzerrung schwundbehafteter Funkfelder. Hierbei soll die Entzerrung einfach, kostengünstig und unabhängig von Modulator und Demodulator sowie unabhängig vom Modulationsverfahren erfolgen.

Der Erfindung sieht hierzu vor, daß auf der Sendeseite Pilot-Einfüge-Einrichtungen (10) eingeschaltet sind, in denen Pilotfrequenzen dem mit Pilotlücken versehenen Digitalspektrum zuaddiert werden. Auf der Empfangsseite sind Kreuzpolarisationsentzerrer für das vertikal und das horizontal polarisierte Signal eingeschaltet. Das erfindungsgemäße Übertragungssystem beruht darauf, daß die frequenzabhängige Laufzeit- und Amplitudenverzerrung des z.B. vom horizontal polarisierten Sender in den vertikal polarisierten Empfänger gelangten Störsignales mit Hilfe des Pilotsystems für die enzelnen Pilotfrequenzstützpunkte ermittelt wird. Mit Hilfe dieser Amplituden- und Laufzeit/Phasensteuersignale wird ein ausgekoppelter ZF-Anteil des horizontalen Empfängers bei den Pilotfrequenzen so in Amplitude und Laufzeit vorverzerrt, daß er, gegenphasig in die Zwischenfrequenz des vertikalen Empfängers eingespeist, dort das aus der horizontalen Polarisation stammende Störsignal kompensiert.

EP 0 176 873 A1

./...

FIG 1

Siemens Aktiengesellschaft _ı_      Unser Zeichen
Berlin und München                  VPA **84** P 1 7 1 7 E

**0176873**

Digitales Übertragungssystem mit Kreuzpolarisationsentzerrung

Die Erfindung bezieht sich auf ein digitales Übertragungssystem für Gleichkanalübertragung mit Einrichtungen zur
adaptiven Kreuzpolarisationsentzerrung schwundbehafteter
Funkfelder.

Die Gleichkanalübertragung mit Kreuzpolarisationsentzerrung kann die Übertragungskapazität vorhandener Trassen
wesentlich steigern. Durch Depolarisationseffekte im
Funkfeld gelangen jedoch aus der horizontalen Polarisation
Störanteile in das Empfangssignal des vertikalen Empfängers und umgekehrt. Das Störspektrum ist im Vergleich
zum ursprünglichen Sendespektrum des Störers sowohl in
seiner Amplitude als auch in seiner Laufzeit verzerrt.

Der Erfindung liegt die Aufgabe zugrunde, für ein digitales Übertragungssystem für Gleichkanalübertragung eine
Lösung zur Kreuzpolarisationsentzerrung anzugeben. Die
Entzerrung soll einfach, kostengünstig und unabhängig von
Modulator und Demodulator sowie unabhängig vom Modulationsverfahren erfolgen.

Diese Aufgabe wird bei einem Übertragungssystem der eingangs beschriebenen Art gemäß der Erfindung in der Weise
gelöst, daß auf der Sendeseite des Übertragungssystems
zwischen einem Modulator zur Erzeugung des ZF-Signals
und der Sendeeinrichtung im Signalweg des horizontal und
des vertikal polarisierten Signals jeweils eine Pilot-Einfüge-Einrichtung eingeschaltet ist, in der Pilotfrequenzen
dem mit Pilotlücken versehenen Digitalspektrum zuaddiert
werden und daß auf der Empfangsseite mit einem Empfänger
für das horizontal polarisierte Signal und einem Empfänger

31. Aug. 1984 / Klu 1 Kdg

**0176873**

für das vertikal polarisierte Signal zwischen dem jeweiligen Empfänger und einem adaptiven Entzerrer und nachfolgendem Demodulator ein Kreuzpolarisationsentzerrer für das vertikal und ein Kreuzpolarisationsentzerrer für das horizontal polarisierte Signal eingeschaltet sind, bestehend aus jeweils einem Kompensationszweig zwischen den beiden Signalwegen, in denen aus dem Empfänger der einen, Störsignale der anderen Polarisation enthaltende Signalanteile ausgekoppelt und über Amplituden-, Phasen- und Laufzeitstellglieder dem Ausgang des Empfängers für die andere Polarisation zugeführt werden, sowie aus einem jeweils zum Kompensationszweig parallel liegenden Zweig, in dem über Koppler und Pilotfilter die Pilotfrequenzen der Piloteinfügung einer Polarisation aus beiden Empfängern ausgefiltert werden und aus den ermittelten Amplituden, Phasen/ und Laufzeitdifferenzen der Pilote Steuersignale zur Einstellung der Amplituden- und Laufzeitstellglieder des Kompensationszweiges gewonnen werden.

Vorteilhafte Ausgestaltungen und Weiterbildungen des Erfindungsgegenstandes sind in den Unteransprüchen angegeben.

Nachstehend wird die Erfindung anhand eines in der Zeichnung dargestellten Ausführungsbeispiels näher erläutert.

Es zeigen

Figur 1 ein digitales Übertragungssystem im Blockschaltbild,

Figur 2 in einer grafischen Darstellung ein mit Pilotlücken versehenes Digitalspektrum mit eingefügten Pilotfrequenzen,

Figur 3 in einer grafischen Darstellung das Spektrum der Pilotfrequenzen und

Figur 4 in einer Detaildarstellung die Einheit zur Regeneration der Taktfrequenz und des Pilotfrequenzabstandes $\Delta f$ innerhalb der Einrichtung zur Kreuzpolarisationsentzerrung.

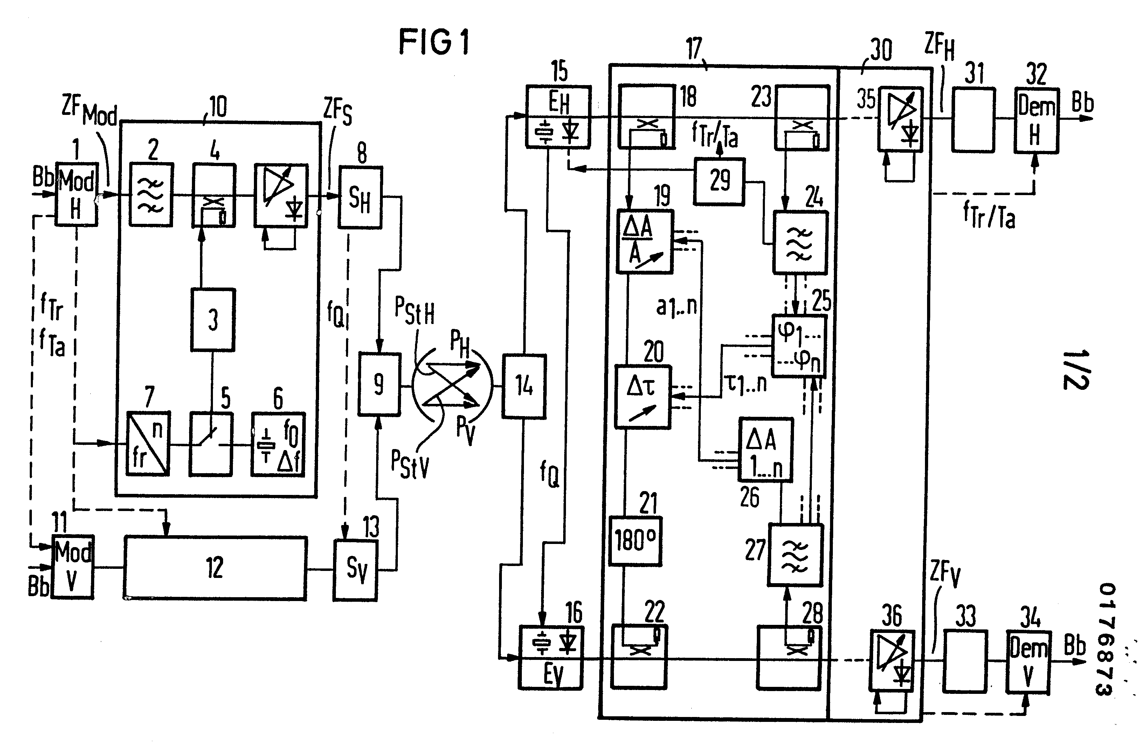

Figur 1 zeigt die Sende- und Empfangseinrichtungen des Übertragungssystems. Dabei ist jeweils ein Zweig für das horizontal polarisierte Signal und ein Zweig für das vertikal
polarisierte Signal vorgesehen. Auf der Sendeseite wird
das jeweilige Basisband Bb einem Modulator 1 für das horizontal polarisierte Signal bzw. einem Modulator 11 für das
vertikal polarisierte Signal zugeführt. Zwischen den Modulatoren 1,11, deren Ausgang jeweils das modulierte Signal
in der ZF-Ebene entnehmbar ist, und dem Sender 8 für das
horizontal polarisierte Signal bzw. dem Sender 13 für das
vertikal polarisierte Signal ist jeweils eine Pilot-Einfüge-
Einrichtung 10 für das horizontal polarisierte Signal bzw.
12 für das vertikal polarisierte Signal eingeschaltet. Die
beiden gleichfrequenten Sender 8 und 13, die über eine
Quarzfrequenz $f_Q$ miteinander snychronisiert sind, sind
ausgangsseitig an eine mit einer Sendeantenne verbundene
Polarisationsweiche 9 angeschlossen.

In den Pilot-Einfüge-Einrichtungen 10 ,12, von denen nur die
Pilot-Einfüge-Einrichtung 10 für das horizontal polarisierte Signal im Detail dargestellt ist, werden dem digitalen Spektrum mit Hilfe eines Filters 2, vorzugsweise
bestehend aus einer Oberflächenwellenfilteranordnung oder
Quarzfilteranordnung, über das Band verteilt schmale
Spektralanteile entnommen. Die Spektralanteile der Breite
$\Delta f_x$ und der Tiefe a $[dB]$ können z.B. in regelmäßigen
Abständen $\Delta f$ angeordnet sein. Diese Störung wirkt so, als
würde dem Signal kompensierend ein synchrones Signal der
Breite $\Delta f$ und der Frequenz $f_p$ zugesetzt. Die Zahl und
Breite der Lücken ist so gewählt, daß eine vorgewählte
Systemdegradation, z.B. 1..2dB 16 QAM, nicht überschritten
wird.

In die Lücken im digitalen Spektrum werden Pilote eingesetzt, die in ihrer Größe ebenfalls auf die gewählte Systemdegradation abgestimmt sind. Die Lage der Pilote zueinander
ist vorzugsweise symmetrisch zum ZF-Träger mit konstanten

Pilotabständen $\Delta f$. Wählt man $\Delta f$ als Bruchteil n der Taktfrequenz unterhalb der Frequenz $f_0$ und als Bruchteil m des Trägers oberhalb der Frequenz $f_0$, so kann durch Mischen jeweils zweier Pilottöne im Empfänger und entsprechende Vervielfachung der Takt und/oder der Träger auch an der $10^{-3}$-Systemschwelle mit gutem Störabstand gewonnen und zum Nachregeln eines Takt- und/oder Trägeroszillators verwendet werden, der praktisch ein Ausrasten der Träger- und Taktschleifen der empfangsseitigen Demodulatoren 32, 34 voll vermeidet.

Die Erzeugung des Pilotrasters in der Pilot-Einfüge-Einrichtung 10 bzw. 12 erfolgt in einem Modulator 3 durch Phasen- oder Frequenzmodulation einer ZF-Frequenz $f_0$ mit einer Frequenz $\Delta f$. Diese Frequenzen können in der Baugruppe 6 der Pilot-Einfüge-Einrichtung 10 bzw. 12 erzeugt werden oder über einen Wählschalter 5 und eine Frequenzteiler- und Aufbereitungsbaugruppe 7 aus den Träger- und Taktfrequenzen des Digitalmodulators 1 abgeleitet werden (strichliert gezeichnete Linien). Die aufbereiteten Pilotfrequenzen werden über einen Koppler 4 dem mit Pilotlücken versehenen Digitalspektrum am Ausgang des Filters 2 zu-addiert. In den Übertragungsweg kann ferner ein pegelge-regelter ZF-Verstärker eingeschaltet werden, der den erforderlichen ZF-Eingangspegel für den Digitalsender 8 (Sender für das horizontal polarisierte Signal) erzeugt.

Der Zweig für das vertikal polarisierte Signal ist in entsprechender Weise aufgebaut wie der vorstehend beschriebene Zweig für das horizontal polarisierte Signal.

Die beiden Sendeseiten für die horizontale und vertikale Polarisation der Gleichkanalübertragung, die über die Polarisationsweiche 9 zur Sendeantenne gelangen, enthalten ihre eigenen Pilotsysteme, die sich in den Pilotfrequenzen unterscheiden und mit $\Delta f_H$ und $\Delta f_V$ bezeichnet sind.

Sollen Träger und Takt mitübertragen werden, so könnte dies z.B. bei einem Austausch der Träger- und Taktfrequenzen zwischen den Modulatoren 1 und 11 und einen Austausch der Senderträgerfrequenz zwischen den Sendern 8 und 13 über nur eine der Piloteinfügungen erfolgen.

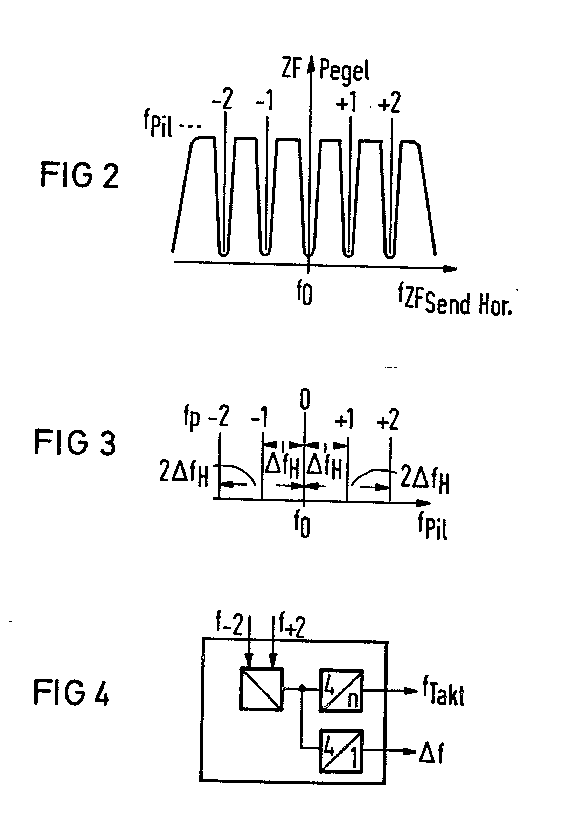

Das Digitalspektrum mit Pilotlücken und in diese Lücken eingefügten Pilotfrequenzen ist in Figur 2 dargestellt. Dabei ist der ZF-Pegel über der senderseitigen ZF-Frequenz für das horizontal polarisierte Signal aufgetragen. Die einzelnen Pilotfrequenzen $f_P=+1, -1, +2, -2$ sind in symmetrisch zur Frequenz $f_0$ angeordnete Lücken eingefügt. Figur 3 zeigt das zugehörige Pilotspektrum. Hierbei ist angenommen, daß $f_0$ gleich der Trägerfrequenz ist, also $f_0=f_{Tr}$. $\Delta f_H$ beträgt

$$\frac{f_{Takt}}{n} \quad oder \quad \frac{f_{Träger}}{m} \; .$$

Durch Depolarisationseffekte im Funkfeld FF gelangen aus der horizontalen Polarisation Störanteile $\overline{P}_{StH}=\overline{P}_{H(\omega)} \cdot \overline{Y}(\omega) \cdot e^{-T_{H(\omega)} \cdot S}$ in das Empfangssignal des vertikalen Empfängers und Störanteile aus der vertikalen Polarisation $\overline{P}_{StV}=\overline{P}_{V(\omega)} \cdot \overline{X}(\omega) \cdot e^{-T_{V(\omega)} \cdot S}$ in das Empfangssignal des horizontalen Empfängers. Das Störspektrum ist im Vergleich zum ursprünglichen Sendespektrum ($P_{H(\omega)}$ bzw. $P_{V(\omega)}$) sowohl in seiner Amplitude ($\overline{Y}(\omega)$ bzw. $\overline{X}(\omega)$) als auch in seiner Laufzeit ($T_{H(\omega)}$ bzw. $T_{V(\omega)}$) verzerrt.

Auf der Empfangsseite des Übertragungssystems gelangen die empfangenen Signale von der Empfangsantenne über eine Polarisationsweiche 14 an den Empfänger 15 für das horizontal polarisierte Signal und den Empfänger 16 für das vertikal polarisierte Signal. Beide Empfänger sind in ihren Trägerfrequenzen durch eine Quarzfrequenz $f_Q$ miteinander synchronisiert. Den Empfängern 15,16 ist ein Kreuzpolarisationsentzerrer 17 für die vertikale Polarisation und ein Kreuzpolarisationsentzerrer 30 für die horizontale Polarisation nachgeschaltet. Ferner ist in jedem Empfängerzweig ein adaptiver Entzerrer 31 bzw. 33 sowie diesem
nachfolgend jeweils ein Demodulator 32, 34 für das horizontal polarisierte Signal bzw. das vertikal polarisierte
Signal eingeschaltet, deren Ausgang das Basisbandsignal Bb
entnehmbar ist.

An den ZF-Ausgängen des Kreuzpolarisationsentzerrers für
die horizontale Polarisation ist in der Figur 1 jeweils
ein ZF-Regelverstärker 35, 36 eingezeichnet, der im Bedarfsfall variierende Pegelverluste durch die Störsignalsubtraktion ausgleicht.

Durch die Kreuzpolarisationsentzerrer 17, 30 für die
Empfänger 16,15 der vertikalen und horizontalen Polarisation werden die Störspektren im Empfangsweg der jeweils
anderen Polarisation kompensiert. Von den beiden im Prinzip gleichartig aufgebauten Kreuzpolarisationsentzerrern
ist lediglich der für die vertikale Polarisation im Detail
dargestellt. Er wird im folgenden bezüglich seines Aufbaus
und seiner Wirkungsweise näher erläutert.

Der Kreuzpolarisationsentzerrer 17 für die vertikale
Polarisation besteht aus einem Kompensationszweig mit
einem Koppler 18 im Empfangszweig des horizontalen
Empfängers 15, der Serienschaltung aus einem Amplitudenstellglied 19, einem Laufzeitstellglied 20 und einem 180$^o$-
Phasenglied 21 sowie einem im Empfangszweig des vertikalen
Empfängers 16 angeordneten Koppelglied 22. Diesem Kompensationszweig ist ein weiterer Zweig parallelgeschaltet,
bestehend aus jeweils einem Koppelglied 23, 28 im Empfangszweig des horizontalen Empfängers 15 bzw. vertikalen
Empfängers 16, einer jedem Koppler nachgeschalteten Pilotfilterbank 24, 27 für die horizontal polarisierten Pilot-
Signale, an die sich ein Phasenvergleichsglied 25 im einen
und ein Amplitudenvergleichsglied 26 im anderen Fall anschließen. Aus den Gruppenlaufzeit/Phasen- und Amplitudenvergleichsgliedern 25,26 werden Steuersignale $\tau_{1..n}$ bzw. $a_{1..n}$ zur Einstellung der Laufzeit- und Amplitudenstellglieder 20, 19 gewonnen.

Das Pilotfilter 24 ist ferner mit einer Einheit 29 verbunden, in der entsprechend den vorgegebenen Zusammenhängen zwischen $\Delta f_H$ und der Takt- bzw. Trägerfrequenz durch Teilung und/oder Multiplikation die Takt- und/oder Trägerfrequenz abgeleitet werden für eine Übergabe an die Demodulatoren 32, 34 (strichlierte Darstellung). Es sind hiervon auch Regelkriterien ableitbar, welche die Trägerversorgung der Empfänger 15,16 so steuern, daß eine phasenstarre trägerexakte Zwischenfrequenz entsteht. Die Einheit 29 ist in Figur 4 im Detail dargestellt.

Die Funktion der Kreuzpolarisationsentzerrer besteht darin, daß die frequenzabhängige Laufzeit- und Amplitudenverzerrung des beispielsweise vom horizontal polarisierten Sender in den vertikal polarisierten Empfänger gelangten Störsignales $P_{StH}$ mit Hilfe des Pilotsystems für die einzelnen Pilotfrequenzstützpunkte ermittelt wird. Mit Hilfe der Amplitudensteuersignale $a_{1..n}$ und Laufzeit- /Phasensteuersignale $\tau_{1..n}$ wird ein im Koppler 18 ausgekoppelter ZF-Signalanteil des Empfängers 15 mit horizontaler Polarisation bei den Pilotfrequenzen im Amplitudenstellglied 19 und Laufzeitstellglied 20 so in Amplitude und Laufzeit vorverzerrt, daß er nach Durchlaufen des $180^{O}$-Phasengliedes 21 über den Koppler 22 gegenphasig in die Zwischenfrequenz des vertikalen Empfängers 16 eingespeist wird und dort aus der horizontalen Polarisation stammende Störsignale $P_{StH}$ kompensiert. Der Regelvorgang entspricht dem einer Proportionalregelung, der die Phasen/Laufzeit- und Amplitudenverzerrungen bei den Pilotfrequenzen bis auf Restfehler beseitigt. Zwischen den Pilotfrequenzen werden die Störungen interpolierend kompensiert. Über den Kompensationszweig mit den Baugruppen 18-22 in den Empfangszweig der vertikalen Polarisation rückgespeiste Verzerrungen $P_{StV}$ wirken

wie Echoverzerrungen der vertikalen Polarisation und werden im vertikalen adaptiven Entzerrer 33 in üblicher Weise entzerrt.

Über die Koppler 23, 28 und die Pilotfilter 24, 27 für die Pilotfrequenzen der horizontalen Piloteinfügung werden aus beiden Empfängern die horizontalen Pilotfrequenzen ausgefiltert. Die in der Amplitudenvergleichsschaltung 26 ermittelten Pilotamplituden für die verschiedenen Pilotfrequenzen steuern, aufbereitet, als Signale $a_{1..n}$ der entsprechenden Pilotfrequenz zugeordnete Amplitudenstellglieder 19 so, daß die Signale $a_{1..n}$ Minimalwerte erreichen. Dies heißt, daß die Horizontal-Pilottöne und die benachbarten störenden 16 QAM-Spektralanteile der horizontalen Polarisation aus der Zwischenfrequenz des Vertikalempfängers herauskompensiert sind. Das ist jedoch nur dann möglich, wenn die kompensierenden Pilottöne nicht nur amplitudengleich, sondern auch gegenphasig und ohne Laufzeitunterschied zum Störsignal in der vertikalen Zwischenfrequenz zuaddiert werden. Laufzeitausgleich und Gegenphasigkeit werden im Laufzeitglied 20 und im $180^{o}$-Phasendrehglied 21 erreicht. Der Phasen- und damit auch Laufzeitunterschied ist über einen Phasenvergleich der kompensierenden und der zu kompensierenden Pilottöne meßbar und steuert über die Signale $\tau_{1..n}$ den einzelnen Pilottönen zugeordnete Laufzeitstellglieder, bis die Bedingung für Gegenphasigkeit und Kompensation erfüllt ist. Um den Bereich für eindeutige Gruppenlaufzeitdetektion zu erweitern (> 150 msek), kann auch die Phasendifferenz zwischen den Differenzfrequenzen $\Delta f_{H}$ benachbarter Pilotfrequenzen verglichen werden.

Mit den erfindungsgemäßen Maßnahmen ist auch eine Pilotaddition und Spektralunterdrückung im Pilotfrequenzbereich im digitalen Basisband der Sendeseite möglich, setzt jedoch eine lineare Modulation im ZF-Bereich voraus.

10 Patentansprüche
4 Figuren

Patentansprüche

1. Digitales Übertragungssystem für Gleichkanalübertragung mit Einrichtungen zur adaptiven Kreuzpolarisationsentzerrung schwundbehafteter Funkfelder, dadurch gekennzeichnet, daß auf der Sendeseite des Übertragungssystems zwischen einem Modulator (1;11) zur Erzeugung des ZF-Signals und der Sendeeinrichtung (8;13) im Signalweg des horizontal und des vertikal polarisierten Signals jeweils eine Pilot-Einfüge-Einrichtung (10;14) eingeschaltet ist, in der Pilotfrequenzen dem mit Pilotlücken versehenen Digitalspektrum zuaddiert werden und daß auf der Empfangsseite mit einem Empfänger (15) für das horizontal polarisierte Signal und einem Empfänger (16) für das vertikal polarisierte Signal im Zwischenfrequenzbereich zwischen dem jeweiligen Empfänger und einem adaptiven Entzerrer (31; 33) und nachfolgendem Demodulator (32;34) ein Kreuzpolarisationsentzerrer (17) für das vertikal und ein Kreuzpolarisationsentzerrer (30) für das horizontal polarisierte Signal eingeschaltet sind, bestehend aus jeweils einem Kompensationszweig (18,19,20,21,22) zwischen den beiden Signalwegen, in denen aus dem Empfänger der einen, Störsignale der anderen Polarisation enthaltende Signalanteile ausgekoppelt und über Amplituden- und Phasen/Laufzeitstellglieder (19,20,21) dem ZF-Ausgang des Empfängers für die andere Polarisation kompensierend zugeführt werden, sowie aus einem jeweils zum Kompensationszweig parallel liegenden Zweig, in dem über Koppler (23,28) und Pilotfilter (24,27) die Pilotfrequenzen der Piloteinfügung einer Polarisation aus beiden Empfängern ausgefiltert werden und aus den ermittelten Amplituden und Phasen/Laufzeiten der Pilote Steuersignale zur Einstellung der Amplituden- und Laufzeitglieder (19,20) des Kompensationszweiges gewonnen werden.

2. Übertragungssystem nach Anspruch 1,
dadurch gekennzeichnet,
daß die Sender (8;13) und Empfänger (15;16) für die beiden
unterschiedlich polarisierten Signale jeweils miteinander
synchronisiert sind.

3. Übertragungssystem nach Anspruch 1 oder 2,
dadurch gekennzeichnet,
daß Spektralanteile der Breite $\Delta f_x$ in festgelegten Abständen über das Spektrum verteilt mit Filtern (2) entnommen sind.

4. Übertragungssystem nach Anspruch 3,
dadurch gekennzeichnet,
daß Zahl und Breite der Lücken so gewählt sind, daß eine
vorgewählte Systemdegradation nicht überschritten wird.

5. Übertragungssystem nach Anspruch 3 oder 4,
dadurch gekennzeichnet,
daß die in die Lücken eingesetzten Pilote ($f_p$) hinsichtlich ihrer Größe auf die vorgewählte Systemdegradation
abgestimmt sind.

6. Übertragungssystem nach einem der Ansprüche 2 bis 5,
dadurch gekennzeichnet,
daß der Abstand $\Delta f$ der zuaddierten Pilottöne für die
horizontale Senderichtung z.B. als Bruchteil n der Taktfrequenz gewählt wird und als Bruchteil n des Trägers z.B.
für die vertikale Senderichtung gewählt wird, und daß
Takt und Trägerfrequenzen der Modulatoren gleich gewählt
sind.

7. Übertragungssystem nach einem der vorhergehenden Ansprüche,
dadurch gekennzeichnet,
daß das Pilotraster in einem Modulator (3) der Pilot-Einfüge-Einrichtung (10;12) durch Phasen- oder Frequenzmodu-

lation einer ZF-Frequenz $f_0$ mit einer Frequenz $\Delta f$ erzeugt wird.

8. Übertragungssystem nach Anspruch 7,
**d a d u r c h   g e k e n n z e i c h n e t ,**
daß die beiden Modulationsfrequenzen $f_0$ und $\Delta f$ in der Pilot-Einfüge-Einrichtung (10;12) erzeugt werden.

9. Übertragungssystem nach Anspruch 7,
**d a d u r c h   g e k e n n z e i c h n e t ,**
daß die Modulationsfrequenzen $f_0$ und $\Delta f$ aus den Träger- und Taktfrequenzen des Modulators (1;11) des Senders abgeleitet und über eine Frequenzteiler- und Aufbereitungseinrichtung (7) und gegebenenfalls einen Wählschalter (5) dem Modulator (3) in der Pilot-Einfüge-Einrichtung (10;12) zugeführt werden.

10. Übertragungssystem nach einem der vorhergehenden Ansprüche,
**d a d u r c h   g e k e n n z e i c h n e t ,**
daß die Sendeeinrichtungen für die verschiedenen Polarisationen ihre eigenen Pilotsysteme mit unterschiedlichen Pilotfrequenzen aufweisen.

FIG 1

1/2

0176873

FIG 2

$f_{Pil}$ --- $-2$ $-1$ $+1$ $+2$ ZF Pegel

$f_0$ $f_{ZF Send Hor.}$

FIG 3

$f_p$ $-2$ $-1$ $0$ $+1$ $+2$

$2\Delta f_H$ $\Delta f_H$ $\Delta f_H$ $2\Delta f_H$

$f_0$ $f_{Pil}$

FIG 4

$f_{-2}$ $f_{+2}$

$\frac{4}{n}$ $f_{Takt}$

$\frac{4}{1}$ $\Delta f$

Europäisches Patentamt

**EUROPÄISCHER RECHERCHENBERICHT**

**0176873**
Nummer der Anmeldung

EP 85 11 1814

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | US-A-3 735 266 (AMITAY)<br>* Spalte 2, Zeile 47 - Spalte 3, Zeile 53; Spalte 5, Zeilen 5-19; Spalte 5, Zeile 44 - Spalte 6, Zeile 8 * | 1 | H 04 B 7/00 |
| A |  | 10 | |
| Y | PATENTS ABSTRACTS OF JAPAN, Band 3, Nr. 129 (E-147), 26. Oktober 1979, Seite 153 E 147; & JP - A - 54 107 612 (NIPPON DENSHIN DENWA KOSHA) 23-08-1979<br>* Insgesamt * | 1 | |
| A | Idem | 6 | |
| Y | US-A-2 065 826 (ROOSENSTEIN u.a.)<br>* Seite 1, linke Spalte, Zeilen 31-35; Seite 1, rechte Spalte, Zeilen 23-26; Seite 1, Zeile 29 - Seite 2, linke Spalte, Zeile 40 * | 1 | RECHERCHIERTE SACHGEBIETE (Int Cl 4)<br><br>H 04 B |
| A |  | 3 | |
| A | US-A-2 669 691 (EDMONDS)<br>*, Spalte 1, Zeilen 31-37; Spalte 2, Zeilen 12-17; Spalte 3, Zeilen 42-54 * | 1 | |

--- -/-

Der vorliegende Recherchenbericht wurde für alle Patentansprüche erstellt

| Recherchenort<br>DEN HAAG | Abschlußdatum der Recherche<br>20-12-1985 | Prüfer<br>HOLPER G.E.E. |
|---|---|---|

## Europäisches Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| A | NATIONAL TELECOMMUNICATIONS CONFERENCE, Band 2, 1.-3. Dezember 1975, Seiten 43-18 - 43-25, New Orleans, US, IEEE, New York, US; B.D. CULLEN u.a.: "Spectrum-reuse by adaptive polarization separation" * Seite 43-21, linke Spalte, Zeilen 10-13; Seite 43-22, linke Spalte, letzter Absatz; Seite 43-24, linke Spalte, Zeile 19 - rechte Spalte, Zeile 7 * | 1 | |

RECHERCHIERTE SACHGEBIETE (Int Cl 4)

Der vorliegende Recherchenbericht wurde für alle Patentansprüche erstellt

| Recherchenort DEN HAAG | Abschlußdatum der Recherche 20-12-1985 | Prüfer HOLPER G.E.E. |
|---|---|---|